# EUROPÄISCHE PATENTSCHRIFT

(11) **EP 1 541 896 B1**
(45) Veröffentlichungstag und Bekanntmachung des Hinweises auf die Patenterteilung: **26.04.2006**
(21) Anmeldenummer: 04026045.7
(22) Anmeldetag: 03.11.2004
(51) Int. Cl.: F16H 7/12

(54) **Riemen-Spannvorrichtung**
Belt tensioner
Tendeur de courroie

(30) Priorität: 11.12.2003 DE 10358315
(43) Veröffentlichungstag der Anmeldung: 15.06.2005
(73) Patentinhaber: Bayerische Motoren Werke Aktiengesellschaft, 80809 München (DE)
(72) Erfinder: Lemberger, Heinz, 85774 Unterföhring (DE)

(56) Entgegenhaltungen:
- EP-A- 1 273 826
- US-A- 4 454 236
- US-A- 4 758 208

## Beschreibung

Die Erfindung bezieht sich gemäß dem Oberbegriff des Patentanspruches 1 auf eine Riemen-Spannvorrichtung, insbesondere für einen Riementrieb mindestens eines Hilfsaggregates an einer Brennkraftmaschine, die zum betriebsgemäßen Spannen eines Riemens eine Spannrolle an einem schwenkbeweglich in/an einem Anschlussteil angeordneten und von einem vorgespannten Federelement beaufschlagten Schwenkarm umfasst, sowie eine zwischen Schwenkarm und Anschlussteil vorbestimmt wirksame Sperreinrichtung, mittels der die Spannrolle vom Riemen montagebedingt weggeschwenkt angeordnet gehalten ist, entsprechend dem Oberbegriff des Anspruchs 1 und wie aus der gattungsgemäßen EP 1273826A bekannt ist.

Die US 5,244,438 zeigt und beschreibt eine Riemen-Spannvorrichtung mit auf einem Einstellexzenter eines Anschlussteiles schwenkbeweglich gelagerten Arbeitsexzenter als Träger bzw. als Schwenkarm einer Spannrolle, wobei zum Spannen des Riemens auf den als Schwenkarm dienenden Arbeitsexzenter eine vorgespannte Spiralfeder einwirkt zur spannenden Anlage der Spannrolle am Riemen. Da einerseits eine bei der Montage am bereits aufgelegten Riemen anliegende Spannrolle die Montage der Spannvorrichtung erheblich erschwert und andererseits eine nach der Montage in den Riemenbereich geschwenkte Spannrolle ein Auflegen des Riemens erheblich behindert, weist die bekannte Riemen-Spannvorrichtung eine Sperreinrichtung auf, mittels der die Spannrolle über ihre exzentrische Lagerung in einer vom Riemen entfernten Position gehalten ist. Als Sperrmittel dient ein von Hand entfernbarer Sperrstift, der den die Spannrolle tragenden Schwenkarm bzw. Arbeitsexzenter in einer Durchbrechung durchsetzt und in eine Durchbrechung des Anschlussteiles eingreifend angeordnet ist. Nach Auflegen des Riemens wird zur spannenden Anlage der Spannrolle am Riemen der Sperrstift von Hand entfernt.
Da der Sperrstift vom beendeten Zusammenbau der Spannvorrichtung bis zu deren Montage an der Brennkraftmaschine zur Vermeidung eines selbsttätigen Lösens in beiden Durchbrechungen von Nabe und Anschlussteil relativ passgenau sitzen muss, scheidet eine Wiederverwendung aufgrund möglicher, beim Entfernen des Sperrstiftes entstehender Beschädigungen seines Einsteckabschnittes aus. Dies ergibt einen nachteiligen Materialverbrauch und damit auch zusätzliche Kosten.

Eine weitere Riemen-Spannvorrichtung mit einer von einem federbeaufschlagten Exzenter getragenen Spannrolle ist aus der US 4,832,665 bekannt, wobei der Exzenter relativ zu einem maschinenseitig fixierten Schenkel einer Schraubendruckfeder mittels eines von Hand entfembaren Sperrstiftes fixiert werden kann für eine vom Riemen entfernte Position der Spannrolle. Zur Erzielung der gewünschten Sperr-Position ist der Sperrstift in eine den Exzenterkörper durchsetzende Durchbrechung von erheblicher Länge einzuführen und durchzustecken bis zur Anlage am Federschenkel. Die lange Durchbrechung im Exzenterkörprer ist kostenintensiv in der Herstellung und erfordert bei geringem Schiebespiel einen exakt geraden Sperrstift. Verbogene Sperrstifte scheiden daher für eine Wiederverwendung aus, was zu einem nachteiligen Materialverbrauch und damit zu zusätzlichen Kosten führt.

Ferner ist aus der EP 0 918 960 B1 eine Riemen-Spannvorrichtung bekannt mit einem am Anschlussteil angeordneten Einstellexzenter, auf dem ein die Spannrolle tragender Arbeitsexzenter gegen den Widerstand einer vorgespannten Schraubendruckfeder drehbeweglich gelagert ist. Für eine Montage der bekannten Spannvorrichtung an einer Brennkraftmaschine ist der als Schwenkarm dienende Arbeitsexzenter relativ zum Anschlussteil mit aus dem Riemenbereich mittels eines hebelartigen Werkzeuges weggeschwenkter Spannrolle über eine Sperreinrichtung drehblockiert. Die Sperreinrichtung kann ein als Wegwerfteil vorgesehener Sperrstift sein. Gemäß einer in Figur 7 des vorgenannten Dokumentes aufgezeigten Weiterbildung der Sperreinrichtung ist anstelle des Sperrstiftes eine am Anschlussteil schwenkbar gelagerte Sperrklinke zum formschlüssigen Sperreingriff in eine Ausnehmung eines mit dem Arbeitsexzenter drehfest verbundenen Hebelarmes vorgesehen. Diese Sperrklinke ist am Anschlussteil der bekannten Riemen-Spannvorrichtung bleibend angeordnet, wobei die um ca. 180° verschwenkte Sperrklinke außer Eingriff auf dem als Exzenterscheibe ausgebildeten Hebelarm am Scheibenumfang aufliegt. Dies kann infolge der durch den laufenden Riemen zu Schwenkausschlägen angeregten Spannrolle zu nachteiligen Klappergeräuschen führen.

Schließlich ist aus der US 4, 758, 208 eine Riemen-Spannvorrichtung bekannt für einen Riementrieb einer Starter-Generator-Anordnung, wobei Spannrollen tragende Spannarme auf einem zur Generatorwelle koaxialen Fortsatz am Starter-Generator-Gehäuse schwenkbeweglich gelagert und mittels einer den Fortsatz umschließenden Schraubendrehfeder relativ zueinander in V-förmiger, belastungsabhängig veränderlicher Position gehalten sind. Weiter ist das Generator-Gehäuse relativ zur Brennkraftmaschine unter der Wirkung wechselnder Antriebsmomente begrenzt drehwinkelbeweglich angeordnet zur Steuerung eines am Generator-Gehäuses fest angeordneten Gesperres. Dieses wirkt mit an den Spannarmen vorgesehenen Verzahnungen derart zusammen, dass jeweils der Spannarm mit der auf das Zugtrum des Riemens einwirkenden Spannrolle fixiert ist und lediglich der Spannarm mit der am Leertrum wirksamen Spannrolle frei schwenkbeweglich ist.
Da bei diesem an einem Hilfsaggregat der Brennkraftmaschine fest angeordnetem Gesperre immer eine Sperrklinke mit einem Spannarm in Sperreingriff steht und dabei die andere Sperrklinke außer Sperreingriff mit dem anderen Spannarm ist, eignet sich dieses Gesperre nicht, beide Spannrollen über die Spannarme zugleich in vom Riemen entfernten Positionen gesichert zu halten. Eine derartige Maßnahme ist in dem oben genannten Dokument auch nicht erwähnt.

Der Erfindung liegt die Aufgabe zugrunde, für eine gattungsgemäße Riemen-Spannvorrichtung eine an dieser bleibend angeordnete Sperreinrichtung aufzuzeigen, die durch Nutzung der bei einer Sperrung auftretenden Kräfte eine im Aufbau einfache, kostengünstige Ausführung ermöglicht bei klapperfreier Anordnung.

Diese Aufgabe ist mit dem unabhängigen Patentanspruch dadurch gelöst, dass bei weggeschwenkter Spannrolle mit einem gegenüber der üblichen Riemenspannung stärker federbelasteten Schwenkarm dieser mit einem Sperrelement der Sperreinrichtung mindestens reibschlüssig zusammenwirkt, und dass das Sperrelement in fester Verbindung steht mit einem in einer am Anschlussteil der Spannvorrichtung fest angeordneten Führung vorbestimmt beweglich gelagerten Bolzen, der über das den stärker vorgespannten Schwenkarm sperrende Sperrelement in der Führung mittels einseitiger Belastung durch das beaufschlagte Sperrelement reibschlüssig gehalten ist.

Mit der erfindungsgemäßen Nutzung der bei drehblockiertem Schwenkarm auftretenden Reibkräfte zwischen Schwenkarm und Sperrelement einerseits und zwischen sperrbelastetem Bolzen und dessen Führung andererseits entfallen in vorteilhafter Weise zusätzliche Fixiermittel für den Bolzen, wodurch für die an der Riemen-Spannvorrichtung bleibend angeordnete Sperreinrichtung ein grundsätzlich einfacher Aufbau erzielt ist.

Eine in einem konkreten Aufbau vorteilhaft einfache und kostengünstige Ausführung ist mit einer ersten Ausgestaltung der Erfindung dadurch erreicht, dass bei einem Bolzen mit einem über eine schwenkarmnah in einem Auge des Anschlussteiles angeordnete Führung hinausreichender Endabschnitt dieser zumindest abschnittsweise als mit dem Schwenkarm sperrend zusammenwirkendes Sperrelement der Sperreinrichtung dient, wobei der ein Langloch z.B. durchsetzende Sperr-Bolzen bei vom Schwenkarm entlasteten Sperrelement mittels eines vorgespannten Rückstellelementes außer Sperreingriff gebracht und gesichert angeordnet ist. Mit dieser Ausgestaltung ist ein vorteilhaft einfaches Sperrelement erzielt. Zusätzlich kann ein formschlüssiges Zusammenwirken des Sperrelementes mit dem Schwenkarm die reibschlüssige Klemmung des Bolzens unterstützen.

Bezüglich leichter Zugänglichkeit der Sperreinrichtung sowie deren einfacher Handhabung wird gemäß einer ersten Weiterbildung der vorgenannten ersten Ausgestaltung vorgeschlagen, dass der Sperr-Bolzen zur Schwenkarmachse parallel angeordnet und über eine weitere, schwenkarmfern in einem zusätzlichen Auge des Anschlussteiles angeordnete Führung gelagert ist, und dass der über seine Länge von einem gleichen Durchmesser gebildete Sperr-Bolzen aus einem rostfreien Stahl im schwenkarmfernen Endbereich einen die Eindringtiefe des Sperrelementes in den Schwenkarm begrenzenden, einstückig angeformten Anschlag aufweist, und dass schließlich eine am Sperr-Bolzen zwischen den Führungen vorgesehene Abstützeinrichtung für das vorgespannt angeordnete Rückstellelement als weiterer Anschlag zur Sicherung des außer Sperreingriff gehaltenen Sperr-Bolzens dient.

Mit dieser ersten Weiterbildung ist eine klein bauende Sperreinrichtung erreicht, die in einem beengten Motorraum eines Pkw vorteilhafter Weise von der Längsseite der Brennkraftmaschine zugänglich ist, was insbesondere bei einem Servicefall von Bedeutung ist. Die Ausbildung des Sperr-Bolzens aus einem Edelstahl vermeidet ein korrosionsbedingtes Festsetzen des Bolzens und ist damit ohne Schmiermaßnahmen jederzeit leicht und einwandfrei handhabbar. Schließlich dient die für das Rückstellelement erforderliche Abstützeinrichtung als Endanschlag für den außer Sperreingriff gebrachten Bolzen.

Gemäß einer zweiten Weiterbildung der ersten Ausgestaltung ist das elastische Rückstellelement eine vorgespannte Druckfeder, wobei die einerseits gegen das schwenkarmnahe Auge abgestützte Druckfeder sich andererseits gegen ein federelastisch in einer Nut des Sperr-Bolzens fixiertes Ringelement abstützt, das bei außer Sperreingriff gehaltenem Bolzen als am schwenkarmfernen Auge anliegender Anschlag dient.
Die Vorspannung der Druckfeder als Rückstellelement ist vorteilhafter Weise derart gewählt, dass einerseits bei wirksamer Sperreinrichtung die Reibkräfte zwischen dem Sperr-Bolzen, dem Schwenkarm und den Führungen nicht überwunden werden, dass aber andererseits das Verschieben des Sperr-Bolzens in Sperrstellung von Hand ohne ein Werkzeug leicht möglich ist, und dass der Sperr-Bolzen außer Sperreingriff trotzdem klapperfrei gesichert gehalten ist.

Zur Erzielung einer vorteilhaft klein bauenden Riemen-Spannvorrichtung ist das den Schwenkarm beaufschlagende Federelement eine in einem als langgestrecktes Gehäuse von relativ geringem Durchmesser ausgebildetes Anschlussteil angeordnete Drehstabfeder, die über ein schwenkarmseitig angeordnetes Formschlusselement mittels eines angesetzten, hebelartigen Werkzeuges in Sperrstellung des Schwenkarmes verdrehbar ist zum montage- und servicebedingten Wegschwenken der Spannrolle aus dem Riemenbereich.

Mit einer bekanntlich relativ hohe Federkräfte erzeugenden Drehstabfeder kann nicht nur eine Spannrolle über einen verhältnismäßig langen Schwenkarm einer Optimierung des Riemenverlaufs dienen, sie erzeugt auch bei erfindungsgemäßer Nutzung in der Sperreinrichtung solche Reibkräfte, dass der Sperr-Bolzen selbsttätig im Schwenkarm und den Führungen sicher ohne gesonderte Mittel geklemmt gehalten ist. Mit dem im freien Endbereich der Drehstabfeder vorgesehenen Formschlusselement, z.B. in Gestalt eines Sechskantes, ist insbesondere bei engen Einbauverhältnissen der Brennkraftmaschine die Riemen-Spannvorrichtung mittels eines seitlich angesetzten Gabelschlüssels leicht zugänglich für eine Sperrung oder Entsperrung.

Die erfindungsgemäße Sperreinrichtung ist mit einer kompakt bauenden Riemen-Spannvorrichtung kombiniert, wobei das Gehäuse des Anschlussteiles einen Anschlussflansch für eine Anordnung der Spannvorrichtung außerhalb des Riementriebes aufweist und die mit Bolzen-Führungen ausgebildeten Augen an einem Leichtmetall-Gehäuse einstückig angeformt sind, wobei ggf. an das schwenkarmnahe Auge sich ein Schwenkanschlag für den Schwenkarm anschließt.

Mit der vorbeschriebenen Gestaltung ist eine mittel- oder unmittelbare längsseitige, Einbauraum sparende Anordnung der Riemen-Spannvorrichtung an der Brennkraftmaschine erreicht, wobei z.B. eine zylinderkopfnahe Anordnung der Spannvorrichtung an der Maschinenseite oder an einem Hilfsaggregat eine vorteilhaft leichte Zugänglichkeit der Sperreinrichtung ermöglicht.

Ein zweites Ausführungsbeispiel bzw. eine zweite Ausgestaltung der im unabhängigen Patentanspruch beschriebenen Erfindung ist dadurch gekennzeichnet, dass ein Sperr-Bolzen in seinem schwenkarmfernen Bereich hakenförmig gestaltet ist mit einem geraden Abschnitt, dessen freier Endbereich in einer Längsnut verschiebbar ist, die am Außenumfang eines als langgestrecktes Gehäuse von relativ geringem Durchmesser ausgebildeten Anschlussteiles zur Aufnahme einer Drehstabfeder angeordnet ist, wobei ein schwenkarmnaher, den Endbereich des Haken-Abschnittes formschlüssig umgreifender Nutabschluss einer Sicherung der Sperrposition des Sperr-Bolzens sowie zur Begrenzung seiner Eindringtiefe in den Schwenkarm dient, und ein schwenkarmferner, den Endbereich des Haken-Abschnittes entgegengesetzt formschlüssig umgreifender Nutabschluss einer Sicherung des mittels eines Rückstellelementes außer Sperreingriff gehaltenen Sperr-Bolzens dient.

Diese Ausgestaltung bietet sich in vorteilhafter Weise dann an, wenn ein zweites Führungs-Auge für einen geraden Sperr-Bolzen gemäß der ersten Ausgestaltung aus Platzgründen an dem Drehstabfeder-Gehäuse nicht möglich ist und das schwenkarmseitige, einzige Auge mit einer ausreichend langen Bolzen-Führung gestaltet werden kann.

In Weiterbildung der zweiten Ausgestaltung wird zur Erzielung einer klapperfreien Anordnung des Sperr-Bolzens vorgeschlagen, dass ein jeweiliges Rückstellelement ein auf den Sperr-Bolzen ausübendes Drehmoment derart angeordnet ist, dass der Endbereich des geraden Haken-Abschnittes gegen eine die diametralen Nutabschlüsse durchgehend verbindend ausgebildete Nutwand anschlägt.

Die beiden vorbeschriebenen Riemen-Spannvorrichtungen mit den unterschiedlich ausgebildeten Sperreinrichtungen eignen sich zur Verwendung mit einem einzigen Schwenkarm in einem Riementrieb ohne Wechsel von Leertrum auf Zugtrum.

Die vorbeschriebenen Riemen-Spannvorrichtungen sind aber auch für eine Verwendung in einem Riementrieb mit einem Wechsel von Leertrum auf Zugtrum und umgekehrt (z.B.Starter-Generator) in vorteilhafter Weise erweiterbar dadurch, dass ein zweiter, mit einer Spannrolle ausgerüsteter Schwenkarm vorgesehen ist, der über ein drehfest verbundenes Rohr mit der in diesem angeordneten, auf den ersten Schwenkarm direkt einwirkenden Drehstabfeder in drehfester Verbindung steht, wobei das Rohr am schwenkarmfernen Ende mit einem drehfest angeordneten Zweikant zum Ansetzen eines hebelartigen Werkzeuges ausgerüstet ist, mittel dessen der zweite Schwenkarm relativ zu dem bereits mittels eines der o.g. Sperr-Bolzen in Sperrstellung gehaltenen ersten Schwenkarmes über das Zweikant in eine Sperrstellung gedreht und mittels einer zweiten, gesonderten Sperreinrichtung fixiert ist.

Zur Erzielung eines unkomplizierten Aufbaues einer Riemen-Spannvorrichtung mit zwei, jeweils eine Spannrolle tragenden Schwenkarmen sind erfindungsgemäß zwei Sperreinrichtungen mit zur Schwenkarmachse unterschiedlich wirksamen Sperr-Richtungen vorgesehen. Neben der oben beschriebenen, erfindungsgemäßen Sperreinrichtung mit einem zur Schwenkarmachse parallel angeordneten Sperr-Bolzen für den ersten Schwenkarm ist der zweite Schwenkarm mittels eines quer zur Schwenkarmachse wirksamen Sperrmittels drehblockierbar.
Hierfür umfasst die gesonderte Sperreinrichtung bei aus einem oder zwei Hebeln gebildeten zweiten Schwenkarm einen an einem der Hebel gegen eine Federkraft beweglich angeordneten Schieber, der mit einem halbkreisförmig gestalteten, einen Sperrzahn aufweisenden Klinkenbogen in fester Verbindung steht, wobei der Sperrzahn zur Fixierung des zweiten Schwenkarmes am bereits drehblockiert angeordnetem ersten Schwenkarm mit einer an diesem fest angeordneten, als Zylinderabschnitt gestalteten Endkappe mit einer in dieser angeordneten Durchbrechung sperrend zusammenwirkt.

Der Vorteil der gesondert zweiten Sperreinrichtung ist neben der guten Zugänglichkeit und einfachen Handhabung ein geringer Einbauraum bei einfachstem Aufbau. Diese Sperreinrichtung ist außerhalb der Erfindung auch für eine Riemen-Spannvorrichtung mit nur einem Schwenkarm denkbar, wobei anstelle der o.g. Sperr-Durchbrechungen in einer Endkappe z.B. ein am Anschlussteil angeordneter Fortsatz zum Sperreingriff des Sperrzahnes dienen kann.

Ein drittes Beispiel bzw. eine dritte Ausgestaltung der Erfindung kennzeichnet sich dadurch, dass ein Schwenkarm einer ein- oder zweiarmigen Riemen-Spannvorrichtung im freien Endbereich einen zur Schwenkachse konzentrischen Bogenabschnitt mit einer radial einwärts gerichteten Rastausnehmung aufweist zum Sperreingriff einer wippenartig angeordneten Sperrklinke, die mit einem in Führungen des Anschlussteiles gelagerten, bei Sperrbelastung reibschlüssig drehgesicherten Bolzen in drehfester Verbindung steht, wobei ein zwischen beabstandeten Führungen drehvorgespannt angeordnetes Rückstellelement über den Bolzen die ausgerastete Sperrklinke außer Eingriff gesichert und in vorteilhafter Weise klapperfrei hält.

Auch dieses Ausführungsbeispiel weist die Vorteile einer guten Zugänglichkeit bei einfacher Handhabung sowie einen geringen Einbauraum bei einfachem Aufbau auf.

Mit den verschiedenen vorbeschriebenen, auf einem gemeinsamen Erfindungsgedanken beruhenden Sperreinrichtungen für mit jeweils insbesondere mit einer Drehstabfeder ausgerüsteten Riemen-Spannvorrichtungen kann sowohl für den Erstmontage- als auch für den Servicefall (Riemenwechsel) jeder Schwenkarm vorteilhaft weit aus dem Riemenbereich weggeschwenkt fixiert werden für ein problemloses Auflegen des Riemens auf die Riemenscheiben. Auch bei beengten Einbauverhältnissen einer Brennkraftmaschine mit einem an deren freien Stirnseite vorhandenen Riementrieb ist durch die von der Seite her gegebene Zugänglichkeit zum sperrenden Spannen der Riemen-Spannvorrichtung in Kombination mit werkzeugfreier Betätigung der jeweiligen erfindungsgemäßen Sperreinrichtung ein Riemenwechsel möglich.

Die Erfindung ist anhand von in der Zeichnung dargestellten Beispielen beschrieben. Es zeigt:
- Fig.1: eine einarmige Riemen-Spannvorrichtung mit einer Sperreinrichtung, die einen langgestreckten, zur Schwenkarm-Achse parallelen Sperr-Bolzen umfasst,
- Fig.2: eine Variante der o.g. Riemen-Spannvorrichtung mit einer halbgeöffneten Bolzen-Führung in einem Auge,
- Fig.3: eine weitere Variante mit abgewandeltem Bolzen,
- Fig.4: eine zweiarmige Riemen-Spannvorrichtung mit jeweils einer axial und einer radial relativ zur Schwenkarm- Achse wirksamen Sperreinrichtung,
- Fig.5: die vorgenannte Riemen-Spannvorrichtung mit einem abgewandelten zweiten Schwenkarm, und
- Fig.6: eine weitere einarmige Riemen-Spannvorrichtung mit einer bolzengelagerten Sperrklinke.

Eine Riemen-Spannvorrichtung 1 für einen nicht gezeigten Riementrieb mindestens eines Hilfsaggregates an einer Brennkraftmaschine umfasst zum betriebsgemäßen Spannen eines Riemens eine Spannrolle 2 an einem schwenkbeweglich an einem Anschlussteil 3 angeordneten und von einer vorgespannten, im Anschlussteil 3 montierten Drehstabfeder beaufschlagten Schwenkarm 4. Die Spannvorrichtung 1 ist mit einer zwischen Schwenkarm 4 und Anschlussteil 3 vorbestimmt wirksamen Sperreinrichtung 5 kombiniert, mittels der die Spannrolle 2 in einer vom Riemen montagebedingt weggeschwenkten Position gehalten werden kann.

Zur Erzielung einer an der Spannvorrichtung 1 bleibend angeordneten Sperreinrichtung 5 , die durch Nutzung der bei einer Sperrung auftretenden Kräfte eine einfache, kostengünstig herstellbare Ausführung bei klapperfreier Anordnung ermöglicht, wird gemäß der Erfindung vorgeschlagen, dass bei weggeschwenkter Spannrolle 2 mit einem gegenüber der üblichen Riemenspannung stärker vorgespannten Schwenkarm 4 dieser mit einem Sperrelement 6 der Sperreinrichtung 5 insbesondere reibschlüssig zusammenwirkt, wobei das Sperrelement 6 in fester Verbindung steht mit einem in einer am Anschlussteil 3 der Spannvorrichtung 1 fest angeordneten Führung 7 vorbestimmt beweglich gelagerten Bolzen 8, der über das den stärker vorgespannten Schwenkarm 4 sperrende bzw. drehblockierende Sperrelement 6 in der Führung 7 mittels einseitiger Belastung durch das beaufschlagte Sperrelement 6 reibschlüssig gehalten ist. Damit ist in vorteilhafter Weise ein in der Sperrstellung durch reibschlüssiges Klemmen selbsttätig gesicherter Bolzen 8 erreicht.

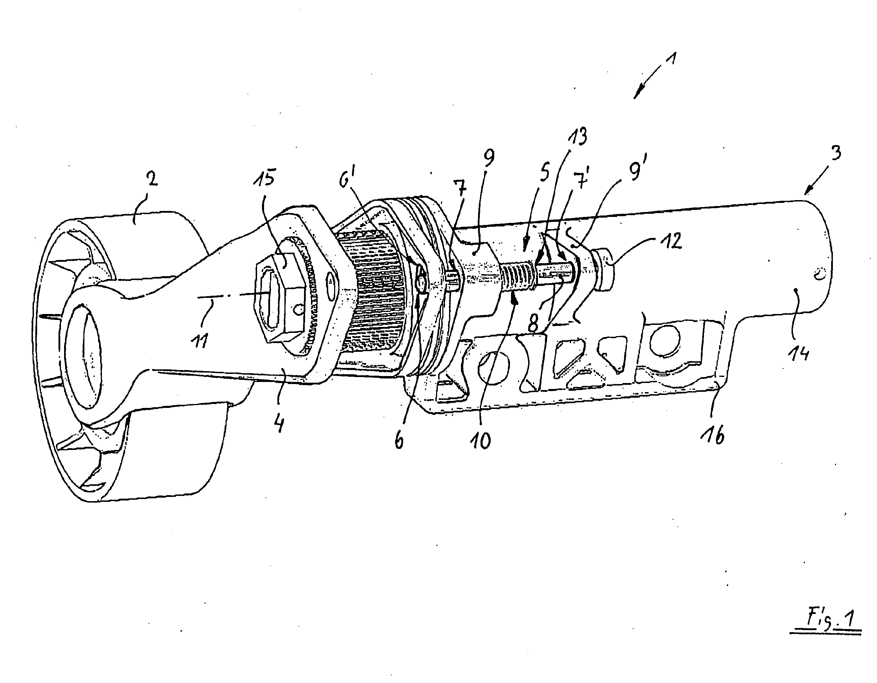

Bei der Riemen-Spannvorrichtung 1 nach Fig.1 umfasst der Bolzen 8 einen über eine schwenkarmnah in einem Auge 9 des Anschlussteiles 3 angeordnete Führung 7 hinausreichenden Endabschnitt, der abschnittsweise als mit dem Schwenkarm 4 über ein in diesem angeordnetes Langloch 6' oder eine sonstige größere Durchbrechung oder Ausnehmung sperrend zusammenwirkendes Sperrelement 6 der Sperreinrichtung 5 dient. Ferner ist der Sperr-Bolzen 8 bei vom Schwenkarm 4 entlastetem Sperrelement 6 mittels einer vorgespannten Rückstellfeder 10 außer Sperreingriff gebracht und gesichert angeordnet.

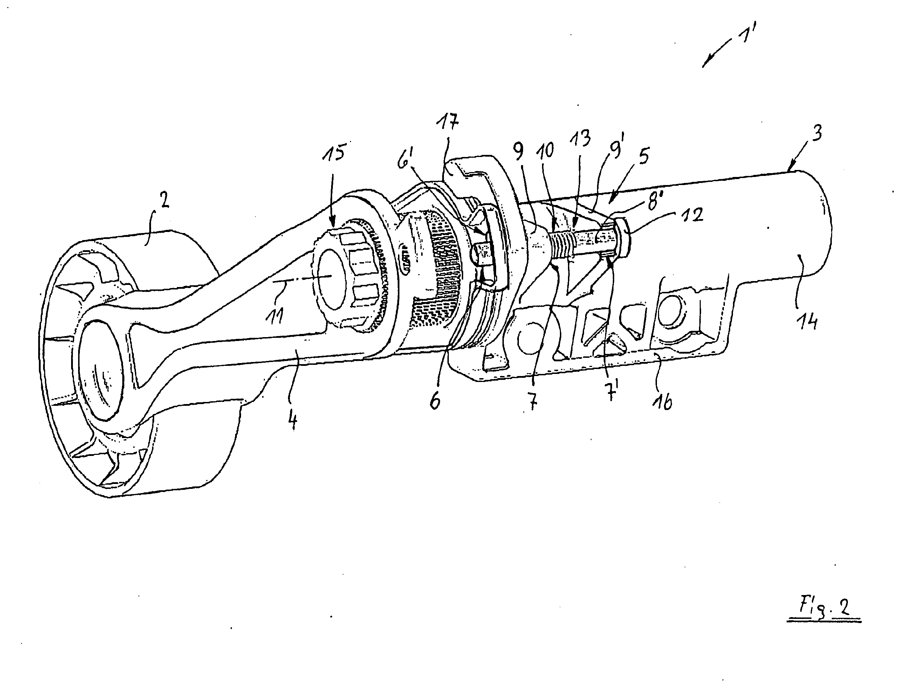

Wie aus der Fig.1 weiter ersichtlich, ist der Sperr-Bolzen 8 zur Achse 11 des Schwenkarmes 4 parallel angeordnet und über eine weitere, schwenkarmfern in einem zusätzlichen Auge 9' des Anschlussteiles 3 angeordnete Führung 7' gelagert. Der über seine gesamte Länge von einem gleichen Durchmesser gebildete Sperr-Bolzen 8 aus einem rostfreien Stahl weist im schwenkarmfernen Endbereich einen die Eindringtiefe des Sperrelementes 6 in den Schwenkarm 4 begrenzenden, einstückig durch Stauchen angeformten Anschlag 12 auf. Schließlich dient eine am Sperr-Bolzen 8 zwischen den Augen 9, 9' bzw. den Führungen 7, 7' vorgesehene Abstützeinrichtung 13 für die Rückstellfeder 10 als weiterer Anschlag zur Sicherung des außer Sperreingriff gehaltenen Sperr-Bolzens 8.
Die Rückstellfeder 10 ist eine vorgespannte Druckfeder, die einerseits gegen das schwenkarmnahe Auge 9 und andererseits gegen die Abstützeinrichtung 13 anliegt, wobei die Abstützeinrichtung 13 ein federelastisch in einer Nut des Sperr-Bolzens 8 fixiertes Ringelement, vorzugsweise ein Seegerring ist. Dieser dient zugleich bei außer Sperreingriff gehaltenem Sperr-Bolzen 8 als am schwenkarmfernen Auge 9' anliegender Bolzen-Anschlag.
Die den Schwenkarm 4 beaufschlagende Drehstabfeder der Spannvorrichtung 1 ist in einem als langgestrecktes Gehäuse 14 von relativ geringem Durchmesser ausgebildeten Anschlussteil 3 am schwenkarmfernen Ende drehfest angeordnet. Am schwenkarmseitigen Ende ist die Drehstabfeder mit einem als Sechskant 15 gestalteten Formschlusselement verbunden, das zum Ansetzen eines Gabelschlüssels als hebelartigem Werkzeug dient zum Verschwenken des Schwenkarmes 4 für ein montage- oder servicebedingtes Wegschwenken der Spannrolle 2 aus dem Riemenbereich.
Für eine Anordnung der Spannvorrichtung 1 außerhalb des Riementriebes weist das aus einem Leichtmetall gefertigte Gehäuse 14 einen angepassten Anschlussflansch 16 auf. Weiter sind die mit den Bolzen-Führungen 7, 7' ausgebildeten Augen 9, 9' an dem Gehäuse 14 einstückig angeformt. An das schwenkarmnahe Auge 9 kann sich ggf. ein Schwenkanschlag 17 anschließen, wie dies aus Fig.2 ersichtlich ist. Ferner ist bei dieser mit Fig.1 im wesentlichen identischen Spannvorrichtung 1' erkennbar, dass die Führung 7' im Auge 9' nur hälftig ausgebildet ist, wodurch ein Sperr-Bolzen 8' mit einer am Umfang durch Material-Quetschungen erzeugten Abstützeinrichtung 13 in den Augen 9,9' gelagert angeordnet werden kann.

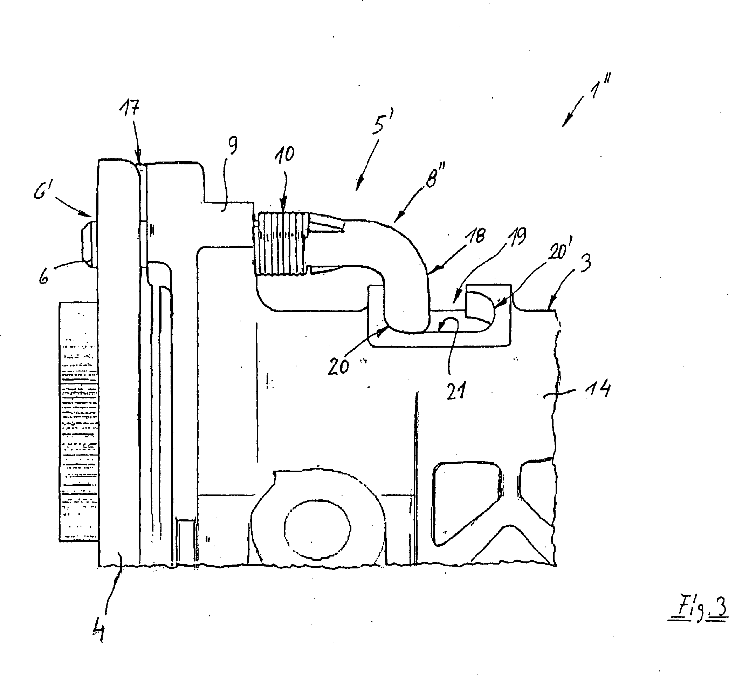

Die Fig.3 zeigt eine mit den Spannvorrichtungen 1,1' der Figuren 1 und 2 in wesentlichen Bauteilen identische, abschnittweise gezeigte Riemen-Spannvorrichtung 1" mit einem abweichend gestalteten Sperr-Bolzen 8" der Sperreinrichtung 5'. Dieser Sperr-Bolzen 8" ist in seinem schwenkarmfernen Bereich hakenförmig gestaltet mit einem geraden Abschnitt 18, dessen freier Endbereich in eine am Außenumfang des als Anschlussteil 3 ausgebildeten Gehäuses 14 vorgesehene Längsnut 19 eingreift. Die Längsnut 19 ist derart gestaltet, dass ein schwenkarmnaher, den Endbereich des Haken-Abschnittes 18 formschlüssig umgreifender Nutabschluss 20 einer Sicherung der Sperrposition des Sperr-Bolzens 8" sowie zur Begrenzung seiner Eindringtiefe in den Schwenkarm 4 dient und dass ein schwenkarmferner, den Endbereich des Haken-Abschnittes 18 entgegengesetzt formschlüssig umgreifender Nutabschluss 20' einer Sicherung des mittels einer Rückstellfeder 10 außer Sperreingriff gehaltenen Sperr-Bolzens 8" dient.
Die Rückstellfeder 10 ist derart angeordnet, dass sie auf den Sperr-Bolzen 8" ein so gerichtetes Drehmoment ausübt, dass der Endbereich des geraden Haken-Abschnittes 18 gegen eine die diametralen Nutabschlüsse 20. 20' durchgehend verbindend ausgebildete Nutwand 21 anschlägt.

Die vorbeschriebenen Riemen-Spannvorrichtungen 1, 1', 1" finden mit ihrem jeweils einzigen Schwenkarm 4 in einem Riementrieb ohne Wechsel von Leertrum auf Zugtrum Verwendung.

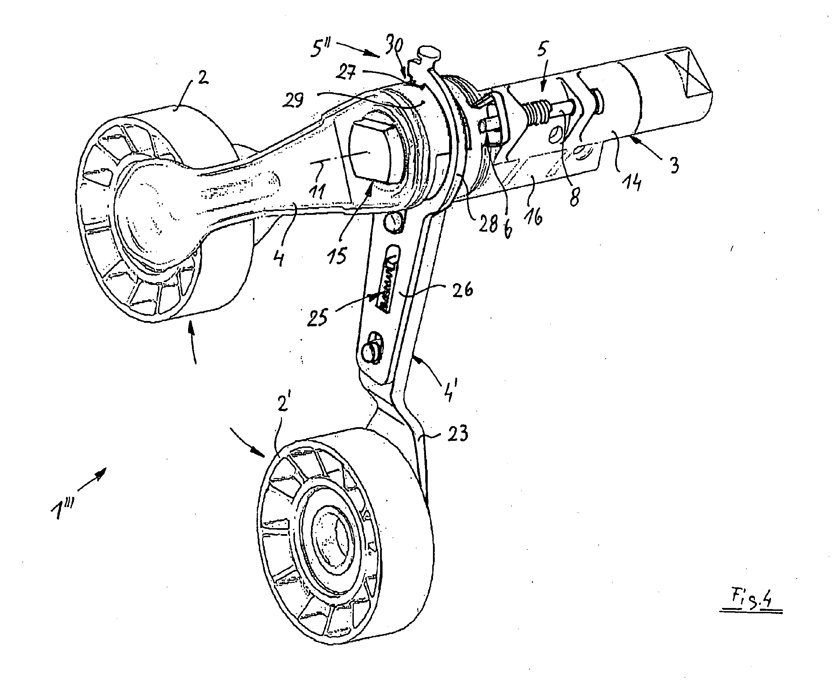

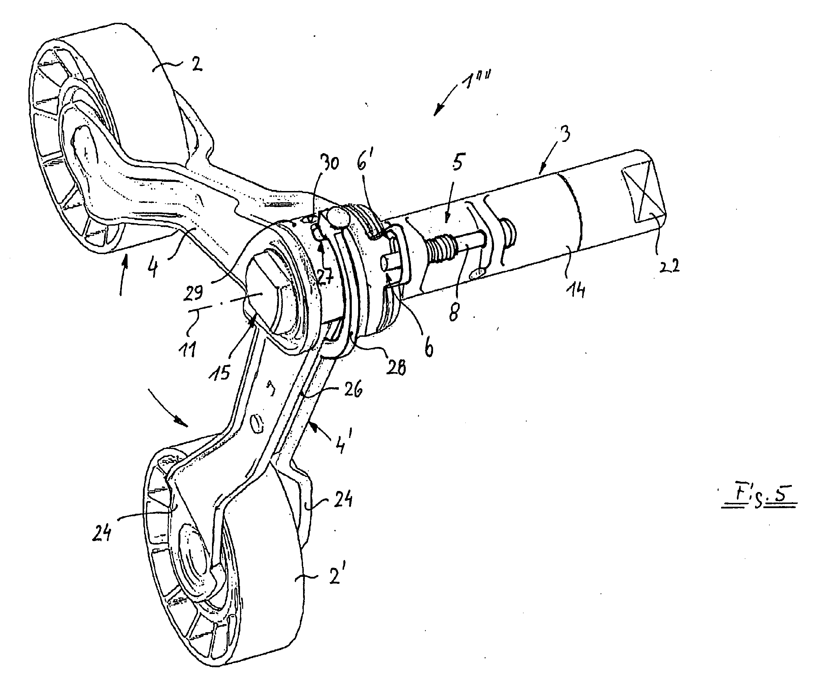

Demgegenüber ist bei einem Riementrieb mit einem betriebsbedingten Wechsel von Leertrum auf Zugtrum und umgekehrt gemäß Fig.4 eine Spannvorrichtung 1"' bzw. eine mit dieser gemäß Fig.5 geringfügig abgewandelte Spannvorrichtung 1 "" zweckmäßig. Bei jeder der Spannvorrichtungen 1'" und 1"" ist jeweils ein zweiter, mit einer Spannrolle 2' ausgerüsteter Schwenkarm 4' vorgesehen, der über ein drehfest verbundenes, nicht erkennbares Rohr mit der in diesem angeordneten, mit dem ersten Schwenkarm 4 direkt verbundenen Drehstabfeder in drehfester Verbindung steht. Das vorgenannte Rohr seinerseits ist in dem als Anschlussteil 3 gestalteten Gehäuse 14 drehbeweglich gelagert und über ein am schwenkarmfernen Ende mit einem drehfest angeordneten Zweikant 22 am Gehäuse 14 axialgesichert angeschlagen. Das Zweikant 22 dient zum Ansetzen eines hebelartigen Werkzeuges ,wie z. B. einem Gabelschlüssel, um den zweiten Schwenkarm 4' relativ zu dem bereits mittels eines der weiter vorne beschriebenen Sperr-Bolzen 8,8',8" in Sperrstellung gehaltenen ersten Schwenkarmes 4 in eine Sperrposition zu bringen, wobei der jeweilige zweite Schwenkarm 4' mittels einer gesonderten Sperreinrichtung 5" drehfixiert ist.
Die gesonderte Sperreinrichtung 5" umfasst bei gemäß Fig.4 aus einem Hebel 23 oder bei gemäß Fig. 5 aus zwei Hebeln 24 gebildeten jeweiligem Schwenkarm 4' einen an einem der Hebel 23 oder 24 gegen eine vorgespannte Druckfeder 25 beweglich angeordneten Schieber 26, der mit einem halbkreisförmig gestalteten, einen Sperrzahn 27 aufweisenden Klinkenbügel 28 in fester Verbindung steht. Hierbei wirkt der Sperrzahn 27 zur Fixierung des jeweiligen zweiten Schwenkarmes 4' am bereits drehblockiert angeordneten, jeweiligen ersten Schwenkarm 4 mit einer an diesem fest angeordneten, als Zylinderabschnitt gebildeten Endkappe 29 mit einer in dieser angeordneten Durchbrechung 30 zusammen.
Die zweiarmigen Spannvorrichtungen 1"' und 1"" finden bevorzugt Verwendung in einem Riementrieb für einen Starter-Generator einer Brennkraftmaschine.

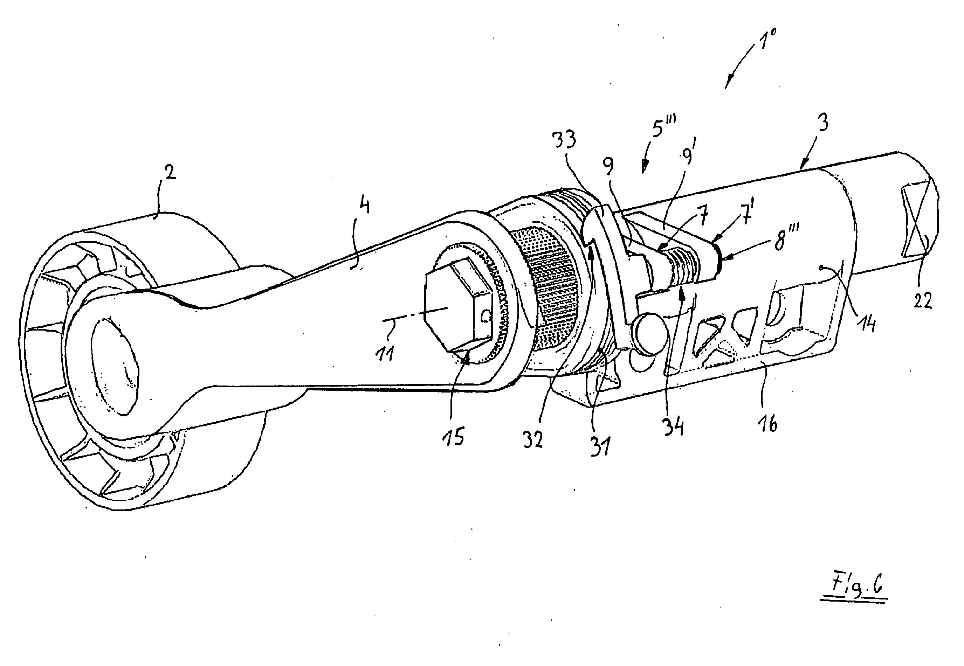

Das in Fig.6 dargestellte Ausführungsbeispiel der Erfindung zeigt eine mit den weiter oben beschriebenen einarmigen Spannvorrichtungen 1,1" der Figuren 1-2 weitgehend gleich gestaltete Spannvorrichtung 1°, wobei ein Schwenkarm 4 einer ein- oder zweiarmigen Riemen-Spannvorrichtung 1, 1',1 ", 1 "', 1"", 1° im freien Endbereich einen zur Achse 11 des Schwenkarmes 4 konzentrischen Bogenabschnitt 31 mit einer radial einwärts gerichteten Rastausnehmung 32 aufweist zum Sperreingriff einer wippenartig angeordneten Sperrklinke 33, die mit einem in Führungen 7,7'gelagerten, bei Sperrbelastung in den Führungen 7,7' reibschlüssig lagegesichert gehaltenen Bolzen 8'" in drehfester Verbindung steht. Eine zwischen beabstandeten Führungen 7,7' drehvorgespannte Rückstellfeder 34 hält über den Bolzen 8'" die ausgerastete Sperrklinke 33 gesichert außer Eingriff.
Die jeweilige, vorgenannte Drehstabfeder kann einteilig oder mehrteilig aus Federstahlstreifen oder Federstahldrähten aufgebaut sein für eine kompakte Ausführung der jeweiligen Riemen-Spannvorrichtung 1 - 1°.

Mit der Erfindung ist in vorteilhafter Weise eine Beschädigung der Spannvorrichtung beim Fixieren vermieden; sie ist weiter äußerst servicefreundlich, und es entsteht weder bei der Montage der Spannvorrichtung an der Brennkraftmaschine noch bei einem Servicefall wie einem Riemenwechsel ein mit der Spannvorrichtung verbundener Abfall.

## Patentansprüche

1. Riemen-Spannvorrichtung, insbesondere für einen Riementrieb mindestens eines Hilfsaggregates an einer Brennkraftmaschine,
- die zum betriebsgemäßen Spannen eines Riemens eine Spannrolle (2,2') an einem schwenkbeweglich in/an einem Anschlussteil (3) angeordneten und von einem vorgespannten Federelement beaufschlagten Schwenkarm (4,4') umfasst, sowie
- eine zwischen Schwenkarm (4,4') und Anschlussteil (3) vorbestimmt wirksame Sperreinrichtung (5), mittels der
- die Spannrolle (2,2') vom Riemen montagebedingt weggeschwenkt angeordnet gehalten ist,
**dadurch gekennzeichnet,**
- **dass** bei weggeschwenkter Spannrolle (2,2') mit einem gegenüber der üblichen Riemenspannung stärker vorgespannten Schwenkarm (4) dieser mit einem Sperrelement (6,31) der Sperreinrichtung (5,5"') mindestens reibschlüssig zusammenwirkt, und
- **dass** das Sperrelement (6,31) in fester Verbindung steht mit einem in einer am Anschlussteil (3) der Spannvorrichtung (1 - 1 °) fest angeordneten Führung (7,7') vorbestimmt beweglich gelagerten Bolzen (8,8',8",8'"),
- wobei der Bolzen über das den starker vorgespannten Schwenkarm (4) sperrende Sperrelement (6,31) in der Führung (7,7') mittels einseitiger Belastung durch das beaufschlagte Sperrelement (6, 31) reibschlüssig gehalten ist.

2. Spannvorrichtung nach Anspruch 1, **dadurch gekennzeichnet,**
- **dass** bei einem Bolzen (8) mit einem über eine schwenkarmnah in einem Auge (9) des Anschlussteiles (3) angeordnete Führung (7) hinausreichender Endabschnitt dieser zumindest abschnittsweise als mit dem Schwenkarm (4) sperrend zusammenwirkendes Sperrelement (6) der Sperreinrichtung (5) dient, wobei
- der in ein schwenkarmseitiges Langloch (6')eingreifende Sperr-Bolzen (8) bei vom Schwenkarm (4) entlastetem Sperrelement (6) mittels eines vorgespannten Rückstellelementes (10) außer Sperreingriff gebracht und gesichert angeordnet ist.

3. Spannvorrichtung nach Anspruch 2, **dadurch gekennzeichnet,**
- **dass** der Sperr-Bolzen (8,8',8") zur Schwenkarmachse (11) parallel angeordnet und über eine weitere, schwenkarmfern in einem zusätzlichen Auge (9') des Anschlussteiles (3) angeordnete Führung (7') gelagert ist,
- **dass** der über seine Länge von gleichem Durchmesser gebildete Sperr-Bolzen (8,8',8") aus einem rostfreien Stahl im schwenkarmfernen Endbereich einen die Eindringtiefe des Sperrelementes (6) in den Schwenkarm (4) begrenzenden, einstückig angeformten Anschlag (12) aufweist, und
- **dass** schließlich eine am Sperr-Bolzen (8,8',8") zwischen den Führungen (7,7') vorgesehene Abstützeinrichtung (13) für das vorgespannt angeordnete Rückstellelement (10) als weiterer Anschlag zur Sicherung des außer Sperreingriff gehaltenen Sperr-Bolzens (8, 8') dient.

4. Spannvorrichtung nach Anspruch 2, 3, **dadurch gekennzeichnet,**
- **dass** das elastische Rückstellelement eine vorgespannte Druckfeder (10) ist, und
- **dass** die einerseits gegen das schwenkarmnahe Auge (9)abgestützte Druckfeder (10) sich andererseits gegen ein federelastisch in einer Nut des Sperr-Bolzens (8,8') fixiertes Ringelement (13) abstützt, das
- bei außer Sperreingriff gehaltenem Bolzen (8,8') als am schwenkarmfernen Auge (9') anliegender Anschlag dient.

5. Spannvorrichtung nach den Ansprüchen 1 - 4, **dadurch gekennzeichnet,**
- **dass** das den Schwenkann (4) beaufschlagende Federelement eine in einem langgestreckten Gehäuse (14) von relativ geringem Durchmesser ausgebildeten Anschlussteil (3) angeordnete Drehstabfeder ist, die
- über ein schwenkarmseitig angeordnetes Formschlusselement (15) mittels eines angesetzten, hebelartigen Werkzeuges in Sperrstellung des Schwenkarmes (4) verdrehbar ist zum montage- und servicebedingten Wegschwenken der Spannrolle (2,2') aus dem Riemenbereich.

6. Spannvorrichtung nach Anspruch 5, **dadurch gekennzeichnet,**
- **dass** das Gehäuse (14) des Anschlussteiles (3) einen Anschlussflansch (16) für eine Anordnung der Spannvorrichtung ( 1,1',1 ",1 "',1 "",1 °) außerhalb des Riementriebes aufweist, und
- **dass** die mit Bolzen-Führungen (7,7') ausgebildeten Augen (9,9') an einem Leichtmetall-Gehäuse (14) einstückig angeformt sind, wobei
- an das schwenkarmnahe Auge (9 ) sich ggf. ein Schwenkanschlag (17) für den Schwenkarm (4) anschließt.

7. Spannvorrichtung nach Anspruch 1 und 2, **dadurch gekennzeichnet,**
- **dass** ein Sperr- Bolzen (8") in seinem schwenkarmfernen Bereich hakenförmig gestaltet ist mit einem geraden Abschnitt (18), dessen
- freier Endbereich in einer Längsnut (19) verschiebbar ist, die
- am Außenumfang eines als langgestrecktes Gehäuse (14) von relativ geringem Durchmesser ausgebildeten Anschlussteiles (3) zur Aufnahme einer Drehstabfeder angeordnet ist, wobei
- ein schwenkarmnaher, den Endbereich des Haken-Abschnittes (18) formschlüssig umgreifender Nutabschluss (20) einer Sicherung der Sperrposition des Bolzens (8") sowie zur Begrenzung seiner Eindringtiefe in den Schwenkarm (4) dient, und
- ein schwenkarmferner, den Endbereich des Haken-Abschnittes (18) entgegengesetzt formschlüssig umgreifender Nutabschluss (21) einer Sicherung des mittels des Rückstelletementes (10) außer Sperreingriff gehaltenen Sperr-Bolzens (8") dient.

8. Spannvorrichtung nach Anspruch 7, **dadurch gekennzeichnet,**
- **dass** ein jeweiliges Rückstellelement (10) ein auf den Sperr-Bolzen (8") ausübendes Drehmoment derart angeordnet ist,
- **dass** der Endbereich des geraden Haken-Abschnittes (18) gegen eine die diametralen Nutabschlüsse (20,20') durchgehend verbindend ausgebildete Nutwand (21) anschlägt.

9. Spannvorrichtung nach den Ansprüchen 1- 8, **gekennzeichnet durch** die Verwendung mit einem einzigen Schwenkarm (4) in einem Riementrieb ohne Wechsel von Leertrum auf Zugtrum.

10. Spannvorrichtung nach den Ansprüchen 1 -8, **dadurch gekennzeichnet,**
- **dass** ein zweiter, mit einer Spannrolle (2') ausgerüsteter Schwenkarm (4') vorgesehen ist, der
- über ein drehfest verbundenes Rohr mit der in diesem angeordneten, auf den ersten Schwenkarm (4) direkt einwirkenden Drehstabfeder in drehfester Verbindung steht,
- wobei das Rohr am schwenkarmfernen Ende mit einem drehfest angeordneten Zweikant (22) zum Ansetzen eines hebelartigen Werkzeuges ausgerüstet ist,
- mittels dessen der zweite Schwenkarm (4') relativ zu dem bereits mittels eines Sperr- Bolzen (8,8') in Sperrstellung gehaltenen ersten Schwenkarmes (4) über das Zweikant (22) in eine Sperrstellung gedreht und mittels einer zweiten, gesonderten Sperreinrichtung (5") fixiert ist.

11. Spannvorrichtung nach Anspruch 10, **dadurch gekennzeichnet,**
- **dass** die gesonderte Sperreinrichtung (5") bei aus einem oder zwei Hebeln (23,24,24) gebildeten zweiten Schwenkarm (4') einen an einem der Hebel (23,24) gegen eine Feder (25) beweglich angeordneten Schieber (26) umfasst, der
- mit einem halbkreisförmig gestalteten, einen Sperrzahn (27) aufweisenden Klinkenbogen (28) in fester Verbindung steht, wobei
- der Sperrzahn (27) zur Fixierung des zweiten Schwenkarmes (4') am bereits drehblockiert angeordnetem ersten Schwenkarm (4) mit einer an diesem fest angeordneten, als Zylinderabschnitt gestalteten Endkappe (29) mit einer in dieser angeordneten Durchbrechung (30) sperrend zusammenwirkt.

12. Spannvorrichtung nach Anspruch 10,11, **gekennzeichnet durch** die Verwendung in einem Riementrieb mit einem Wechsel von Leertrum auf Zugtrum und umgekehrt für insbesondere einen Startergenerator als Hilfsaggregat einer Brennkraftmaschine.

13. Spannvorrichtung nach Anspruch 1, **dadurch gekennzeichnet,**
- **dass** ein Schwenkarm (4) einer ein- oder zweiarmigen Riemen-Spannvorrichtung (1-1°) im freien Endbereich einen zur Schwenkachse (11) konzentrischen Bogenabschnitt (31) mit einer radial einwärts gerichteten Rastausnehmung (32) aufweist zum Sperreingriff einer wippenartig angeordneten Sperrklinke (33), die
- mit einem in Führungen (7,7') des Anschlussteiles (3) bei Sperrbelastung reibschlüssig drehgesicherten Bolzen (8"') in drehfester Verbindung steht, wobei
- ein zwischen beabstandeten Führungen (7,7') drehvorgespannt angeordnetes Rückstellelement (34) über den Bolzen (8"') die ausgerastete Sperrklinke (33) außer Eingriff hält.

## Claims

1. A belt tensioning device, especially for a belt drive of at least one auxiliary unit on an internal combustion engine, and
- for the purpose of tensioning a belt during operation, comprising a tensioning pulley (2, 2') on a swivel arm (4, 4') pivotably mounted in/on a connecting part (3) and acted upon by a prestressed spring element, and
- a locking device (5) operative in preset manner between the swivel arm (4, 4') and the connecting part (3),
- the locking device holding the tensioning pulley (2, 2') swung away from the belt when required in the assembly process,
**characterised in that**
- when the tensioning pulley (2, 2') is swung away by a swivel arm (4) at a tension above the usual belt tension, the arm co-operates at least by frictional engagement with a locking element (6, 31) of the locking device (5, 5"') and
- the locking element (6, 31) is firmly connected to a pin (8, 8', 8", 8"') movable in predetermined manner in a guide (7, 7') firmly mounted on the connecting part (3) of the tensioning device (1 - 1°), wherein
- the pin is held by frictional engagement by the locking element (6, 31), which locks the more strongly pretensioned swivel arm (4) in the guide (7, 7') by biasing it on one side via the acted-upon locking element (6, 31).

2. A tensioning device according to claim 1, **characterised in that**
- in the case of a pin (8) with an end portion extending over a guide (7) disposed near the swivel arm in an eyelet (9) of the connecting part (3), the end portion, or at least a part of it, acts as an element (6) of the device (5) which locks in co-operation with the swivel arm (4), wherein
- when the locking element (6) is relieved from bias by the swivel arm (4), the locking pin (8), which engages in a slot (6') on the side of the swivel arm, is brought out of locking engagement and secured by a prestressed return element (10).

3. A tensioning device according to claim 2, **characterised in that**
- the locking pin (8, 8', 8") is disposed parallel with the swivel-arm axis (11) and is mounted on an additional guide (7') remote from the swivel arm and disposed in an additional eyelet (9') in the connecting part (3),
- the end region, remote from the swivel arm, of the locking pin (8, 8', 8"), which is formed of stainless steel and has the same diameter along its length, has an integrally formed stop (12) which limits the depth of penetration of the locking element (6) into the swivel arm (4), and
- finally a bracing device (13) provided on the locking pin (8, 8', 8") between the guides (7, 7') and for the prestressed return element (10) serves as an additional stop for securing the locking pin (8, 8') when held out of locking engagement.

4. A tensioning device according to claims 2 and 3, **characterised in that**
- the resilient return element is a prestressed pressure spring (10) and
- the pressure spring (10), which on one side abuts the eyelet (9) near the swivel arm, on the other side abuts against an annular element (13) springily fixed in a groove in the locking pin (8, 8') and
- acting as a stop adjoining the eyelet (9') remote from the swivel arm when the pin (8, 8') is held out of locking engagement.

5. A tensioning device according to claims 1 - 4, **characterised in that**
- the spring element acting on the swivel arm (4) is a torsion bar spring disposed in a connecting part (3) formed in an elongate relatively small-diameter casing (14),
- the spring being rotatable, when the swivel arm (4) is in the locked position, by a lever-like tool applied to a positive engagement element (15) on the swivel arm in order to swing the tensioning pulley (2, 2') out of range of the belt when required during assembly or maintenance.

6. A tensioning device according to claim 5, **characterised in that**
- the casing (14) of the connecting part (3) has a connecting flange (16) for disposing the tensioning device (1, 1', 1 ", 1 "', 1 "", 1 °) outside the belt drive and
- the eyelets (9, 9') formed with pin guides (7, 7') are integrally moulded on a light-metal casing (14), wherein a stop (17) for the swivel arm (4) adjoins the eyelet (9) near the swivel arm, when required.

7. A tensioning device according to claims 1 and 2, **characterised in that**
- a locking pin (8") is hooked in its region remote from the swivel arm and has a straight portion (18),
- the free end region of which is movable in a slot (19), which is disposed on the outer periphery of a connecting part (3) in the form of a relatively small-diameter elongate casing (14) for receiving a torsion-bar spring, wherein a slot termination (20) near the swivel arm and positively surrounding the end region of the hooked portion (18) secures the pin (8") in the locked position and limits the depth to which it can penetrate into the swivel arm (4), and
- a slot termination (21) remote from the swivel arm and positively surrounding the end region of the hooked portion (18) on the other side secures the locking pin (8") when held out of locking engagement by the return element (10).

8. A tensioning device according to claim 7, **characterised in that** a respective return element (10) exerts a torque on the locking pin (8") such that
- the end region of the straight hook portion (18) abuts a continuous slot wall (21) connecting the diametral slot terminations (20, 20').

9. A tensioning device according to any of claims 1 - 8, **characterised by** use with a single swivel arm (4) in a belt drive without changing over from the idle run to the pull run.

10. A tensioning device according to claims 1 - 8, **characterised in that**
- a second swivel arm (4') equipped with a tensioning pulley (2') is provided and
- is co-rotatably connected, via a co-rotatably connected tube, to the torsion-bar spring, which is disposed in the tube and acts directly on the first swivel arm (4),
- wherein the tube, at its end remote from the swivel arm, has a co-rotatably disposed cruciform projection (22) for engaging a lever-like tool,
- by means of which the second swivel arm (4'), relative to the first swivel arm (4) already held in the locked position by a locking pin (8, 8'), is rotated into a locked position via the cruciform projection (22) and fixed by a second separate locking device (5").

11. A tensioning device according to claim 10, **characterised in that**
- the separate locking device (5"), in the case of a second swivel arm (4) formed by one or two levers (23, 24, 24), comprises a slide (26) movable on one of the levers (23, 24) against a spring (25) and
- firmly connected to a semicircular catch (28) comprising a locking tooth (27) wherein
- in order to fix the second swivel arm (4') to the first swivel arm (4) when already locked in rotation, the locking tooth (27) co-operates with an end cap (29) in the form of a cylindrical portion firmly mounted on the swivel arm and formed with a perforation (30).

12. A tensioning device according to claims 10 and 11, **characterised by** use in a belt drive with a change-over from idle run to pull run and vice versa, more especially for an auxiliary unit in the form of a starter generator of an internal combustion engine.

13. A tensioning device according to claim 1, **characterised in that**
- the free end region of a swivel arm (4) of a one or two-armed belt tensioning device (1 - 1°) has an arcuate portion (31) concentric with the swivelling axis (11) and with a radially inwardly directed catch recess (32) for locking engagement with a rocker-like latch (33), which is co-rotatably connected to a pin (8"') secured in rotation by frictional engagement in guides (7, 7') on the connecting part (3) when tensioned, wherein
- a return element (34) prestressed in rotation and disposed between spaced-apart guides (7, 7') holds the latch (33) out of engagement via the pin (8"') when released from the catch.

## Revendications

1. Tendeur de courroie, en particulier pour un entraînement à courroie d'au moins un groupe moteur auxiliaire au niveau d'un moteur à combustion interne, qui, pour tendre de manière appropriée au mode de fonctionnement une courroie, comprend
- un galet tendeur (2, 2') au niveau d'un bras pivotant (4, 4') disposé dans/au niveau d'une partie de raccordement (3) et sollicité par un élément de ressort précontraint, et
- un dispositif de blocage (5) agissant de manière prédéterminée entre le bras pivotant (4, 4') et la partie de raccordement (3),
le galet tendeur (2, 2') étant maintenu pivoté vers l'extérieur hors de la zone de courroie à des fins de montage,
**caractérisé en ce que**
lorsque le galet tendeur (2, 2') est pivoté vers l'extérieur par un bras pivotant (4) sollicité plus fortement par un ressort comparativement à la tension normale de la courroie, celui-ci coopère au moins par frottement avec un élément de blocage (6, 31) du dispositif de blocage (5, 5"'), et l'élément de blocage (6, 31) est relié fixement à un boulon (8, 8', 8", 8"') logé avec une mobilité prédéterminée dans une glissière (7, 7') disposée fixement au niveau de la partie de raccordement (3) du tendeur (1 - 1 °), le boulon étant maintenu par frottement dans la glissière (7, 7'), par l'élément de blocage (6, 31) bloquant le bras pivotant (4) précontraint plus fortement, par une sollicitation unilatérale de l'élément de blocage (6, 31).

2. Tendeur selon la revendication 1,
**caractérisé en ce qu'**
avec un boulon (8) possédant une section d'extrémité dépassant au-delà d'une glissière (7) disposée à proximité du bras pivotant dans un oeillet (9) de la partie de raccordement (3), celle-ci sert au moins sur certaines sections d'élément de blocage (6) du dispositif de blocage (5) coopérant avec le bras pivotant (4),
le boulon de blocage (8), qui s'engage dans un trou oblong (6') situé du côté du bras pivotant, étant maintenu et fixé dans la position désengagée au moyen d'un élément de rappel (10) précontraint lorsque l'élément de blocage (6) n'est plus sollicité par le bras pivotant (4).

3. Tendeur selon la revendication 2,
**caractérisé en ce que**
le boulon de blocage (8, 8', 8") est disposé parallèlement à l'axe du bras pivotant (11) et est logé par une autre glissière (7'), loin du bras pivotant, dans un oeillet supplémentaire (9') de la partie de raccordement (3),
le boulon de blocage (8, 8', 8") en acier inoxydable ayant un diamètre identique sur toute sa longueur, présente, dans sa zone d'extrémité éloignée du bras pivotant, une butée (12) formée d'une seule pièce limitant la profondeur d'enfoncement de l'élément de blocage (6) dans le bras pivotant (4), et
un dispositif de soutien (13) au niveau du boulon de blocage (8, 8', 8") entre les glissières (7, 7'), pour l'élément de rappel (10) précontraint, sert de butée supplémentaire pour fixer le boulon de blocage (8, 8') maintenu en position désengagée.

4. Tendeur selon la revendication 2, 3,
**caractérisé en ce que**
l'élément de rappel élastique est un ressort de pression (10) précontraint, et
le ressort de pression (10) est appuyé d'une part contre l'oeillet (9) situé à proximité du bas pivotant et d'autre part contre un élément annulaire (13) fixé de façon élastique dans une rainure du boulon de blocage (8, 8'), servant de butée au niveau de l'oeillet (9') éloigné du bras pivotant lorsque le boulon (8, 8') est maintenu en position désengagée.

5. Tendeur selon les revendications 1 à 4,
**caractérisé en ce que**
- l'élément de ressort sollicitant le bras pivotant (4) est une barre de torsion disposée dans une partie de raccordement (3) sous la forme d'un boîtier (14) à extension longitudinale ayant un diamètre relativement petit,
- la barre étant rotative, par un élément à complémentarité de formes (15) disposé du côté du bras pivotant (4), au moyen d'un outil formant levier, dans la position de blocage du bras pivotant, pour le pivotement vers l'extérieur du galet tendeur (2, 2') hors de la zone de la courroie à des fins de montage et d'entretien.

6. Tendeur selon la revendication 5,
**caractérisé en ce que**
le boîtier (14) de la partie de raccordement (3) présente une bride de raccordement (16) pour une disposition du tendeur (1, 1', 1", 1"', 1"", 1°) en dehors de l'entraînement de courroie,
les oeillets (9, 9') configurés avec des glissières à boulons (7, 7') sont formés d'une seule pièce au niveau d'un boîtier en métal léger (14), une butée de pivotement (17) pour le bras pivotant étant le cas échéant rattachée à l'oeillet (9) situé à proximité du bras pivotant (4).

7. Tendeur selon les revendications 1 et 2,
**caractérisé en ce que**
dans sa zone éloignée du bras pivotant, un boulon de blocage (8") est conçu sous forme de crochet, avec une section droite (18) dont la zone d'extrémité libre est mobile dans une rainure longitudinale (19) disposée au niveau de la périphérie extérieure d'une partie de raccordement (3) en forme de boîtier (14) à extension longitudinale ayant un diamètre relativement petit pour le logement d'une barre de torsion,
une terminaison de rainure (20) proche du bras pivotant, entoure par complémentarité de formes la zone d'extrémité de la section en forme de crochet (18), servant à fixer la position de blocage du boulon de blocage (8") ainsi qu'à limiter sa profondeur d'enfoncement dans le bras pivotant (4),
une terminaison de rainure (21) éloignée du bras pivotant, entoure par complémentarité de formes, de façon opposée, la zone d'extrémité de la section en forme de crochet (18), servant à fixer le boulon de blocage (8") maintenu en position désengagée au moyen d'un élément de rappel (10).

8. Tendeur selon la revendication 7,
**caractérisé en ce qu'**
un élément de rappel (10) respectif exerçant un couple sur le boulon de blocage (8") est disposé de sorte que la zone d'extrémité de la section en forme de crochet (18) droite bute contre une paroi de rainure (21) reliant sans interruption les terminaisons de rainure (20, 20') diamétralement opposées.

9. Tendeur selon les revendications 1 à 8,
**caractérisé par**
une utilisation avec un unique bras pivotant dans un entraînement à courroie sans changement entre le brin vide et le brin de traction.

10. Tendeur selon les revendications 1 à 8,
**caractérisé en ce qu'**
il est prévu un deuxième bras pivotant (4') équipé d'un galet tendeur (2'), relié de façon non rotative à la barre de torsion disposée dans celui-ci et agissant directement sur le premier bras pivotant (4),
le tube disposé au niveau de l'extrémité éloignée du bras pivotant est équipé d'un deux-pans (22) non rotatif pour l'application d'un outil en forme de levier au moyen duquel le deuxième bras pivotant (4') est tourné, par le deux-pans, (22) dans une position de blocage par rapport au premier bras pivotant (4) déjà maintenu en position de blocage au moyen du boulon de blocage (8, 8'), et est fixé au moyen d'un deuxième dispositif de blocage séparé (5").

11. Tendeur selon la revendication 10,
**caractérisé en ce que**
le dispositif de blocage séparé (5") comprend, pour un deuxième bras pivotant (4') formé d'un ou de deux leviers (23, 24, 24), un coulisseau (26) mobile à l'encontre d'un ressort (25) au niveau de l'un des leviers (23, 24), fixé à un arc de poignée (28) en forme de demi-cercle, présentant une dent de blocage (27),
la dent de blocage (27) bloquant la fixation du deuxième bras pivotant (4') au niveau du premier bras pivotant (4) déjà bloqué en rotation, avec un capuchon d'extrémité (29) en forme de section cylindrique comprenant un passage (30) et fixé au niveau de celui-ci.

12. Tendeur selon la revendication 10, 11,
**caractérisé par**
son utilisation dans un entraînement à courroie avec un changement entre le brin vide et le brin de traction et inversement, en particulier pour un démarreur-générateur en tant que groupe moteur auxiliaire d'un moteur à combustion interne.

13. Tendeur selon la revendication 1,
**caractérisé en ce qu'**
un bras pivotant (4) d'un tendeur de courroie à un ou deux bras (1 - 1 °) présente, dans sa zone d'extrémité libre, une section en arc (31) concentrique par rapport à l'axe de pivotement (11), avec un évidement de blocage (32) orienté radialement vers l'intérieur, pour l'engagement bloquant d'une poignée de blocage (33) disposée à la façon d'une bascule, reliée de façon non rotative à un boulon (8"') logé dans des glissières (7, 7') de la partie de raccordement (3) et sécurisé par frottement contre toute rotation en cas de sollicitation en blocage,
un élément de rappel (34), disposé avec une précontrainte en rotation entre des glissières (7, 7') situées à distance l'une de l'autre, fixant par le boulon (8"'), la poignée de blocage (33) en position désengagée.
